# EUROPEAN PATENT SPECIFICATION

(11) **EP 1 629 043 B1**
(45) Date of publication and mention of the grant of the patent: **09.08.2006**
(21) Application number: 04753269.2
(22) Date of filing: 19.05.2004
(51) Int. Cl.: C08L 27/12

(54) **FLUOROELASTOMER COMPOSITION HAVING EXCELLENT LOW TEMPERATURE PROPERTIES**
FLUORELASTOMERZUSAMMENSETZUNG MIT HERVORRAGENDEN TIEFTEMPERATUREIGENSCHAFTEN
COMPOSITION DE FLUOROELASTOMERE PRESENTANT D'EXCELLENTES PROPRIETES A BASSE TEMPERATURE

(30) Priority: 21.05.2003 US 472232 P; 15.03.2004 US 800893
(43) Date of publication of application: 01.03.2006
(73) Proprietor: DUPONT DOW ELASTOMERS L.L.C., Wilmington, DE 19809 (US)
(72) Inventor: HUNG, Ming-Hong, Wilmington, DE 19803 (US); SCHMIEGEL, Walter, Werner, Wilmington, DE 19807 (US)
(74) Representative: Morf, Jan Stefan
(86) International application number: PCT/US2004/016411
(87) International publication number: WO 2004/104092

(56) References cited:
- EP-A- 0 818 489
- EP-A- 0 842 980
- EP-A- 1 134 276
- US-A- 4 894 418
- US-A- 5 681 881

## Description

### FIELD OF THE INVENTION

This invention relates to fluoroelastomer compositions, and in particular to the enhancement of the low temperature properties of such compositions.

### BACKGROUND OF THE INVENTION

Elastomeric fluoropolymers (i.e, fluoroelastomers) exhibit excellent resistance to the effects of heat, weather, oil, solvents and chemicals. Such materials are commercially available and are most commonly copolymers of vinylidene fluoride (VF₂) with hexafluoropropylene (HFP) and, optionally, tetrafluoroethylene (TFE). Other known fluoroelastomers include copolymers of TFE with a perfluoro(alkyl vinyl ether) such as perfluoro(methyl vinyl ether) (PMVE), copolymer of TFE with propylene (P) and, optionally VF₂, and copolymers of ethylene (E) with TFE and PMVE. Often, these fluoroelastomers also contain copolymerized units of a cure site monomer to facilitate vulcanization. While these copolymers have many desirable properties, including low compression set and excellent processability, their low temperature flexibility is not adequate for all end use applications. One particularly desirable improvement would be a reduction in glass transition temperature (T_{g}) with an accompanying extension of service temperature to lower temperatures. T_{g} is often used as an indicator of low temperature flexibility because polymers having low glass transition temperatures maintain elastomeric properties at low temperatures.

U.S. Patent No. 4,894,418 discloses vinylidene fluoride based fluoroelastomer compositions which contain processing adjuvants that are perfluorinated polyethers having an hydroxyl group at one or both chain ends. Among the benefits listed for such adjuvants is improved low temperature properties. Being perfluorinated, the polyethers disclosed in the '418 patent are not very compatible with vinylidene fluoride based fluoroelastomers which contain polar hydrogen atoms. Such incompatibility may cause processability problems and lead to the ready extraction of the polyether by solvents.

U.S. Patent No. 5,268,405 discloses compositions of TFE/PMVE copolymers which also contain a perfluoropolyether (e.g. DuPont's Krytox® fluorinated oil) for reducing the T_{g} of the composition.

At high temperatures, the perfluoropolyethers employed in all the above compositions tend to be fugitive. As the level of perfluoropolyether in the compositions decreases, the physical properties of the compositions revert to those of compositions containing no perfluoropolyether.

It would be an improvement to have a fluoroelastomer composition wherein the fluorinated polyether is less fugitive than the above perfluoropolyethers.

### SUMMARY OF THE INVENTION

The present invention is directed to a curable composition comprising
A. a fluoroelastomer copolymer;
B. a fluorinated polyether having a general formula of -[CF₂CFH-O-R_{f}-CF₂CH₂O]ₙ-, wherein n is such that M_{w} is between 2000 and 100,000 and R_{f} is selected from the group consisting of a) -(CF₂)ₛ-, wherein s is 1 to 10 ; and b) -[CF₂CF(CF₃)O]ₜ(CF₂)ᵤ-, wherein u is 1 to 10 and t is 1 to 20; and
C. a curing agent.

### DETAILED DESCRIPTION OF THE INVENTION

The fluoroelastomers employed in the compositions of the present invention are capable of undergoing crosslinking reactions with any of the known curatives for fluoroelastomers such as, but not limited to polyhydroxy compounds such as bisphenol AF, diamines such as 1,6-hexamethylenediamine or its dicarbamate, the combination of organic peroxides and polyfunctional coagents, organotin (U.S. Patent No. 5,789,489), bis(aminophenols) such as diaminobisphenol AF (U.S. Patent No. 6,211,319 B1), aromatic tetraamines such as 3,3'-diaminobenzidene, and ammonia generating compounds such as urea and other compounds disclosed in U.S. Patent No. 6,281,296 and WO 01/27194.

The resulting cured elastomeric compositions exhibit good low temperature properties without the loss of other important properties such as tensile strength and compression set resistance. Furthermore, the fluorinated polyethers employed in the compositions of the invention are relatively compatible with the fluoroelastomer and stable to heat. The polyethers do not volatilize out of the crosslinked compositions at typical service temperatures (i.e. 250°- 270°C).

One type of fluoroelastomer which may be employed in the compositions of this invention is based on vinylidene fluoride (VF₂). In addition to copolymerized units of VF₂, this type of fluoroelastomer contains copolymerized units of at least one other fluorine-containing monomer. Examples of such monomers include, but are not limited to hexafluoropropylene (HFP), tetrafluoroethylene (TFE), chlorotrifluoroethylene (CTFE), fluorinated vinyl ethers (FVE) and perfluoro(alkyl vinyl) ethers (PAVE) such as perfluoro(methyl vinyl ether). In addition, the fluoroelastomers may optionally contain copolymerized units of methyl vinyl ether, or an olefin such as ethylene (E) or propylene (P). Peroxide curable fluoroelastomers which contain copolymerized units of vinylidene fluoride, perfluoro(methyl vinyl ether) and tetrafluoroethylene are especially preferred.

Another type of fluoroelastomer which may be employed in this invention is based on tetrafluoroethylene (TFE). In addition to copolymerized units of TFE, this type of fluoroelastomer contains copolymerized units of at least one other monomer such as a PAVE, a FVE, methyl vinyl ether, E, or P.

Fluorinated vinyl ethers (FVE) suitable for use as monomers in the fluoroelastomers employed in this invention include those of the formula

CF₂=CFO-(CF₂)ₘ-(CH₂)ₙ-[O(CF₂)ₓ]_{y}-O-A

where m is an integer between 0 and 4; n is an integer between 0 and 2; x is an integer between 1 and 3; y is an integer between 0 and 6; and A is selected from the group consisting of C₁-C₄ perfluoroalkyl groups, C₁-C₆ perfluoroalkoxy groups, and C₁-C₄ alkyl groups containing between 0 and 8 fluorine atoms.

Perfluoro(alkyl vinyl ethers) (PAVE) suitable for use as monomers include those of the formula

CF₂=CFO(R_{f'}O)ₙ(R_{f"}O)ₘR_{f} (I)

where R_{f'} and R_{f"} are different linear or branched perfluoroalkylene groups of 2-6 carbon atoms, m and n are independently 0-10, and R_{f} is a perfluoroalkyl group of 1-6 carbon atoms.

A preferred class of perfluoro(alkyl vinyl ethers) includes compositions of the formula

CF₂=CFO(CF₂CFXO)ₙR_{f} (II)

where X is F or CF₃, n is 0-5, and R_{f} is a perfluoroalkyl group of 1-6 carbon atoms.
A most preferred class of perfluoro(alkyl vinyl ethers) includes those ethers wherein n is 0 or 1 and R_{f} contains 1-3 carbon atoms. Examples of such perfluorinated ethers include perfluoro(methyl vinyl ether) (PMVE) and perfluoro(propyl vinyl ether) (PPVE). Other useful monomers include compounds of the formula

CF₂=CFO[(CF₂)ₘCF₂CFZO]ₙR_{f} (III)

where R_{f} is a perfluoroalkyl group having 1-6 carbon atoms,
m = 0 or 1, n = 0-5, and Z = F or CF₃.
Preferred members of this class are those in which R_{f} is CF₃, m = 1, n= 1, and Z = F; and R_{f} is C₃F₇, m = 0, and n = 1.

Additional perfluoro(alkyl vinyl ether) monomers include compounds of the formula

CF₂=CFO[(CF₂CF{CF₃}O)ₙ(CF₂CF₂CF₂O)ₘ(CF₂)ₚ]CₓF₂ₓ₊₁ (IV)

where m and n independently = 0-10, p = 0-3, and x = 1-5.
Preferred members of this class include compounds where n = 0-1, m = 0-1, and x = 1.

Additional examples of useful perfluoro(alkyl vinyl ethers) include

CF₂=CFOCF₂CF(CF₃)O(CF₂O)ₘCₙF₂ₙ₊₁ (V)

where n = 1-5, m = 1-3, and where, preferably, n = 1.

The fluoroelastomers employed in the compositions of this invention may also contain a cure site for facilitating crosslinking.

Suitable cure sites for crosslinking by organic peroxide/polyfunctional coagent curing systems include to bromine endgroups, iodine endgroups, or a combination thereof. Such cure sites may be introduced to the fluoroelastomer polymer chain by polymerization in the presence of a bromine- or iodine-containing chain transfer agent (U.S. Patent No. 4,243,770). Cure sites may also be introduced by copolymerization of the fluoroelastomer with cure site monomers that contain a bromine or iodine atom such as fluorinated olefins or fluorinated vinyl ethers. Such cure site monomers are well known in the art (e.g. U.S. Patent Nos. 4,214,060; 5,214,106; and 5,717,036). Specific examples include bromotrifluoroethylene (BTFE); 4-bromo-3,3,4,4-tetrafluorobutene-1 (BTFB); and 4-iodo-3,3,4,4-tetrafluorobutene-1 (ITFB). Bis-olefins may also be employed as cure site monomers in peroxide curable fluoroelastomers (U.S. Patent No. 5,585,449)

Suitable cure sites for crosslinking by polyhydroxy curing systems include trifluoroethylene; 3,3,3-trifluoropropene-1; 1,2,3,3,3-pentafluoropropylene; 1,1,3,3,3-pentafluoropropylene; 2,3,3,3-tetrafluoropropene.

Suitable cure sites for crosslinking by organotin, diaminobisphenol AF, 3,3'-diamonobenzidinene, or ammonia generating curatives include, but are not limited to comonomers such as fluorovinyl ethers or fluoroolefins containing pendent nitrile groups. Examples include perfluoro(8-cyano-5-methyl-3,6-dioxa-1-octene) (8-CNVE) and the nitrile-containing cure site monomers disclosed in U.S. Patent No. 6,211,319 B1.

Specific examples of fluoroelastomers suitable for use in the compositions of this invention include elastomers comprising copolymerized units selected from the group consisting of a) VF₂/HFP, b) VF₂/HFP/TFE, c) VF₂/PMVE, d) VF₂/PMVE/TFE, e) VF₂/TFE/P; f) TFE/P; g) E/TFE/PMVE and h) TFE/PMVE. Preferably, these elastomers further comprise at least one type of cure site described above. Most preferably, the fluoroelastomers employed in the compositions of this invention further comprise both iodine endgroups and copolymerized units of an iodine-containing cure site monomer. An especially preferred fluoroelastomer comprises copolymerized units of vinylidene fluoride, perfluoro(methyl vinyl ether) tetrafluoroethylene and ITFB. The latter elastomer also contains iodine endgroups.

The fluorinated polyethers contained in the compositions of this invention are disclosed in U.S. Patent No. 5,134,211. The polyether consists essentially of the repeat unit

-[CF₂CFH-O-R_{f}-CF₂CH₂O]ₙ-,

wherein n is such that the weight average molecular weight (M_{w}) is between 2000 and 100,000 (preferably between 15,000 and 45,000) and R_{f} is selected from the group consisting of a) -(CF₂)ₛ-, wherein s is 1 to 10; and b) ―[CF₂CF(CF₃)O]ₜ(CF₂)ᵤ―, wherein u is 1 to 10 and t is 1 to 20. Preferably, both t and u are 1, or s is 1-3. Most preferably, t and u are 1 so that the fluorinated polyether contains the repeat unit

-[CF₂CFH-O-CF₂CF(CF₃)OCF₂CF₂CH₂O]ₙ-

These fluorinated polyethers have CF₂CFH-O- as one terminal group and -CH₂OH as the other terminal group.

Compositions of this invention contain between 2 and 30 parts by weight fluorinated polyether per 100 parts by weight fluoroelastomer (i.e. 2 to 30 phr - parts per hundred parts rubber). Preferably, compositions contain between 2 and 20 phr fluorinated polyether. As shown in the above structures, the fluorinated polyethers employed in this invention contain polar hydrogen atoms in the repeat units, making this polyether more compatible with vinylidene fluoride based fluoroelastomers than are perfluorinated polyethers.

These fluorinated polyethers may be made by the catalytic anionic polymerization of 9,9-dihydro-9-hydroxy-perfluoro(3,6-dioxa-5-methyl-1-nonene) (EVE-OH) as disclosed in U.S. Patent 5,134,211. Suitable catalysts include cesium carbonate, cesium fluoride, tetraalkylammonium chloride, potassium carbonate, potassium t-butoxide, and tetraphenylphosphonium chloride. EVE-OH is readily prepared (U.S. Patent 4,982,009) by the reduction of methyl perfluoro(5-methyl-4,7-dioxa-8-nonenoate) (EVE) which is commercially available from DuPont. Sodium borohydride is a preferred reducing agent.

The curable compositions of the invention may, optionally, also contain an acid acceptor such as a strongly basic amine (e.g. ProtonSponge®, available from Aldrich), a divalent metal oxide (e.g. magnesium oxide, zinc oxide, calcium oxide, or lead oxide), a divalent metal hydroxide; or a mixture of an oxide and hydroxide. The level of the acid acceptor in the compositions of the invention is generally 1-15 phr, with 2-10 parts being preferred.

The compositions of the present invention also contain a curing agent. One preferred curing agent is an organic peroxide/polyfunctional coagent system. Useful organic peroxides are those which generate free radicals at curing temperatures. A dialkyl peroxide or a bis(dialkyl peroxide) which decomposes at a temperature above 50°C is especially preferred. In many cases it is preferred to use a ditertiarybutyl peroxide having a tertiary carbon atom attached to a peroxy oxygen. Among the most useful peroxides of this type are 2,5-dimethyl-2,5-di(tertiarybutylperoxy)hexyne-3 and 2,5-dimethyl-2,5-di(tertiarybutylperoxy)-hexane. Other peroxides can be selected from such compounds as dicumyl peroxide, dibenzoyl peroxide, tertiarybutyl perbenzoate, and di[1,3-dimethyl-3-(t-butylperoxy)butyl]carbonate. Generally, about 1-3 phr peroxide is used.

The polyfunctional coagent employed with an organic peroxide is a polyunsaturated compound that is capable of cooperating with the peroxide to provide a useful cure. These coagents can be added in an amount equal to 0.1 and 10 phr, preferably between 2-5 phr. The coagent may be one or more of the following compounds: triallyl cyanurate; triallyl isocyanurate; tri(methallyl)isocyanurate; tris(diallylamine)-s-triazine; triallyl phosphite; N,N-diallyl acrylamide; hexaallyl phosphoramide; N,N,N',N'-tetraalkyl tetraphthalamide; N,N,N',N'-tetraallyl malonamide; trivinyl isocyanurate; 2,4,6-trivinyl methyltrisiloxane; and tri(5-norbornene-2-methylene)cyanurate. Particularly useful is triallyl isocyanurate (TAlC).

The curable compositions of the invention may also be cured with a polyhydroxy curing agent. Such compositions contain between 0.1 to 20 parts by weight (preferably 1-3 parts) of polyhydroxy crosslinking agent (or a derivative thereof) per 100 parts fluoroelastomer. Typical polyhydroxy cross-linking agents include di-, tri-, and tetrahydroxybenzenes, naphthalenes, and anthracenes, and bisphenols of the formula 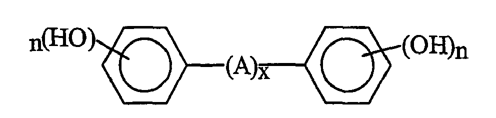 where A is a difunctional aliphatic, cycloaliphatic, or aromatic radical of 1-13 carbon atoms, or a thio, oxy, carbonyl, sulfinyl, or sulfonyl radical; A may optionally be substituted with at least one chlorine or fluorine atom; x is 0 or 1; n is 1 or 2; and any aromatic ring of the polyhydroxylic compound may optionally be substituted with at least one chlorine or fluorine atom, an amino group, a -CHO group, or a carboxyl or acyl radical. Preferred polyhydroxy compounds include hexafluoroisopropylidene-bis(4-hydroxy-benzene) (i.e. bisphenol AF or BPAF); 4,4'-isopropylidene diphenol (i.e. bisphenol A); 4,4'-dihydroxydiphenyl sulfone; and diaminobisphenol AF. Referring to the bisphenol formula shown above, when A is alkylene, it can be for example methylene, ethylene, chloroethylene, fluoroethylene, difluoroethylene, propylidene, isopropylidene, tributylidene, heptachlorobutylidene, heptafluorobutylidene, pentylidene, hexylidene, and 1,1-cyclohexylidene. When A is a cycloalkylene radical, it can be for example 1,4-cyclohexylene, 2-chloro-1,4-cyclohexylene, cyclopentylene, or 2-fluoro-1,4-cyclohexylene. Further, A can be an arylene radical such as m-phenylene, p-phenylene, o-phenylene, methylphenylene, dimethylphenylene, 1,4-naphthylene, 3-fluoro-1,4-naphthylene, and 2,6-naphthylene.

Additional polyhydroxy curing agents include alkali metal salts of bisphenol anions, quaternary ammonium salts of bisphenol anions, tertiary sulfonium salts of bisphenol anions and quaternary phosphonium salts of bisphenol anions. For example, the salts of bisphenol A and bisphenol AF. Specific examples include the disodium salt of bisphenol AF, the dipotassium salt of bisphenol AF, the monosodium monopotassium salt of bisphenol AF and the benzyltriphenylphosphonium salt of bisphenol AF.

Quaternary ammonium and phosphonium salts of bisphenol anions are discussed in U.S. Patents 4,957,975 and 5,648,429. Bisphenol AF salts (1:1 molar ratio) with quaternary ammonium ions of the formula R₁R₂R₃R₄N⁺, wherein R₁-R₄ are C₁-C₈ alkyl groups and at least three of R₁-R₄ are C₃ or C₄ alkyl groups are preferred. Specific examples of these preferred compositions include the 1:1 molar ratio salts of tetrapropyl ammonium-, methyltributylammonium- and tetrabutylammonium bisphenol AF. Such salts may be made by a variety of methods. For instance a methanolic solution of bisphenol AF may be mixed with a methanolic solution of a quaternary ammonium salt, the pH is then raised with sodium methoxide, causing an inorganic sodium salt to precipitate. After filtration, the tetraalkylammonium/BPAF salt may be isolated from solution by evaporation of the methanol. Alternatively, a methanolic solution of tetraalkylammonium hydroxide may be employed in place of the solution of quaternary ammonium salt, thus eliminating the precipitation of an inorganic salt and the need for its removal prior to evaporation of the solution.

Vulcanization accelerators are typically employed in polyhydroxy curable compositions of the invention. Typical accelerators include tertiary sulfonium salts such as [(C₆H₅)₂S⁺(C₆H₁₃)][Cl]⁻, and
[(C₆H₁₃)₂S(C₆H₅)]⁺[CH₃CO₂]⁻ and quaternary ammonium, phosphonium, arsonium, and stibonium salts of the formula
R₅R₆R₇R₈Y⁺ X⁻ ,where Y is phosphorous, nitrogen, arsenic, or antimony; R₅, R₆, R₇, and R₈ are individually C₁-C₂₀ alkyl, aryl, aralkyl, alkenyl, and the chlorine, fluorine, bromine, cyano, -OR, and -COOR substituted analogs thereof, with R being C₁-C₂₀ alkyl, aryl, aralkyl, alkenyl, and where X is halide, hydroxide, sulfate, sulfite, carbonate, pentachlorothiophenolate, tetrafluoroborate, hexafluorosilicate, hexafluorophosphate, dimethyl phosphate, and C₁-C₂₀ alkyl, aryl, aralkyl, and alkenyl carboxylates and dicarboxylates. Particularly preferred are benzyltri-phenylphosphonium chloride, benzyltriphenylphosphonium bromide, tetrabutylammonium hydrogen sulfate, tetrabutylammonium hydroxide, tetrapropylammonium hydroxide, tetrabutylammonium bromide, tributylallylphosphonium chloride, tributyl-2-methoxypropylphosphonium chloride, 1,8-diazabicyclo[5.4.0]undec-7-ene, and benzyldiphenyl(dimethylamino) phosphonium chloride. Other useful accelerators include methyltrioctylammonium chloride, methyltributylammonium chloride, tetrapropylammonium chloride, benzyltrioctylphosphonium bromide, benzyltrioctylphosphonium chloride, methyltrioctylphosphonium acetate, tetraoctylphosphonium bromide, methyltriphenylarsonium tetrafluoroborate, tetraphenylstibonium bromide, 4-chlorobenzyltriphenyl phosphonium chloride, 8-benzyl-1,8-diazabicyclo(5.4.0)-7-undecenonium chloride, diphenylmethyltriphenylphosphonium chloride, allyltriphenyl-phosphonium chloride, tetrabutylphosphonium bromide, m-trifluoromethylbenzyltrioctylphosphonium chloride, and other quaternary compounds disclosed in U.S. Patent Nos. 5,591,804; 4,912,171; 4,882,390; 4,259,463; 4,250,278 and 3,876,654. The amount of accelerator used is between 0.1 and 20 parts by weight per hundred parts by weight fluoroelastomer. Preferably, 0.5-3.0 phr is used.

Other curatives which may be employed in the compositions of the invention include diamines, carbamates thereof, bis(aminophenols) such as diaminobisphenol, tetraamines, organotin and compounds which decompose to produce ammonia at curing temperatures. When present in the compositions of this invention, typically, 0.1 to 7 phr of any one of the latter curatives is employed.

Other additives may be compounded into the fluoroelastomer to optimize various physical properties. Such additives include carbon black, stabilizers, plasticizers, lubricants, pigments, fillers (e.g. mineral fillers such as silicas, alumina, barium sulfate, titanium dioxide), and processing aids typically utilized in perfluoroelastomer compounding. Any of these additives can be incorporated into the compositions of the present invention, provided the additive has adequate stability for the intended service conditions.

Carbon black is used in elastomers as a means to balance modulus, tensile strength, elongation, hardness, abrasion resistance, conductivity, and processability of the compositions. Carbon black is generally useful in amounts of from 5-60 phr.

In addition, or in the alternative, fluoropolymer fillers may be present in the composition. Generally from 1 to 50 phr of a fluoropolymer filler is used, and preferably at least about 5 phr is present. The fluoropolymer filler can be any finely divided, easily dispersed plastic fluoropolymer that is solid at the highest temperature utilized in fabrication and curing of the perfluoroelastomer composition. By solid, it is meant that the fluoroplastic, if partially crystalline, will have a crystalline melting temperature above the processing temperature(s) of the perfluoroelastomer(s). Such finely divided, easily dispersed fluoroplastics are commonly called micropowders or fluoroadditives. Micropowders are ordinarily partially crystalline polymers.

The fluorinated polyether, crosslinking agent, and optional other additives are generally incorporated into the polymer by means of an internal mixer or on a rubber mill. The resultant composition is then cured, generally by means of heat and pressure, for example by compression transfer or injection molding.

The curable compositions of the present invention are useful in production of gaskets, tubing, seals and other molded components. Such articles are generally produced by molding a compounded formulation of the curable composition with various additives under pressure, curing the part, and then subjecting it to a post cure cycle. The cured compositions have excellent low temperature flexibility and processability as well as excellent thermal stability and chemical resistance. They are particularly useful in applications such as seals and gaskets requiring a good combination of oil resistance, fuel resistance and low temperature flexibility, for example in fuel injection systems, fuel line connector systems and in other seals for high and low temperature automotive uses.

The invention is now illustrated by certain embodiments wherein all parts and percentages are by weight unless otherwise specified.

### EXAMPLES

### TEST METHODS

### Cure Characteristics

Unless otherwise noted, cure characteristics were measured using an Alpha Systems model MDR 2000E moving die rheometer (MDR), under the following conditions (ISO 6502):
Moving die frequency: 1.66 Hertz
Oscillation amplitude: ±0.5°
Temperature: 180°C
Sample size: 6 to 10 g
Duration: 12 minutes
The following cure parameters were recorded:
M_{H}: maximum torque level, in units of dN·m
M_{L}: minimum torque level, in units of dN·m
Delta M: difference between maximum and minimum torque, in units of dN-m
tₛ2: minutes to a 2.26 dNm rise above M_{L}
tc50: minutes to 50% of maximum torque
tc90: minutes to 90% of maximum torque

### Tensile Properties

The following physical property parameters were recorded; test methods are in parentheses:
M₁₀₀: modulus at 100% elongation in units of MPa (ISO 37 T2)
T_{B}: tensile strength in units of MPa (ISO 3 T2)
T_{S}: tear strength in units of kN/m (ISO 34, Die B)
E_{B}: elongation at break in units of % (ISO 37 T2)
TR-10: temperature of retraction (ISO 2921)

According to the TR test method, a standard test piece of length 50 mm is stretched at room temperature and then cooled in a bath (usually filled with isopropanol) to a temperature of about 10°C less than the T_{g} of the polymer. The test piece is then allowed to retract freely while the test temperature is raised at a rate of 1°C per minute. Readings of the retracted length are taken every 2 minutes until the retraction reaches 75%. TR-10 is the temperature at which a retraction of 10% is achieved.
Hardness (Shore A, ISO 868)
Compression set of small pip samples (ISO 815)

Glass Transition temperature (T_{g}) was measured by Modulated Differential Scanning Calorimetry (MDSC) at 10°/minute heating rate in nitrogen.

### The following polymers were used in the Examples:

The fluorinated polyether (FPE-1) employed in the examples was prepared by a 2-step process wherein methyl perfluoro(5-methyl-4,7-dioxa-8-nonenoate) (EVE), commercially available from DuPont, was first converted to 9,9-dihydro-9-hydroxy-perfluoro-(3,6-dioxa-5-methyl-1-nonene) (EVE-OH) and then the EVE-OH was homopolymerized.

### (1). Preparation of EVE-OH [CF₂=CFO-CF₂CF(CF₃)O-CF₂CF₂₋CH₂OH]:

To a dry flask was charged EVE® (211 g, 0.50 mole) in absolute ethanol (300 ml). Sodium borohydride(11.34 g, 0.30 mole) was added slowly. The reaction was somewhat exothermic and the reaction flask was kept at about 10°C by external cooling. After the addition of sodium borohydride was completed, the reaction mixture was stirred for 1 hour at ambient temperature. The reaction mixture was then dumped into an ice water/6N HCl (600mL/600 ml) mixture. The bottom (product) layer was separated, washed with water and distilled to give EVE-OH as a clear, colorless liquid. Boiling point: 68°C/25 mm Hg. Yield: 168.7 g (85.6 %). ¹H NMR (CDCl₃): δ4.00 (dt, J = 1.0 Hz, 13.5 Hz, 2H), 2.12 (s, br, 1H); ¹⁹F NMR (CDCl₃, F-11 internal standard): -80.4 s, br, 3F), -84.2 (s, br, 2F), - 85.3 (m, br, 2F), -126.6 (t, J =14 Hz, 2F), -145.7 (t, J =21.8 Hz, 1F), - 113.4, -113.7, -113.8, -114.2 (4s, 1F), -121.6, -112.1, -122.2, -122.7 (4t, J = 5.2 Hz, 1F), -135.3, -135.6. -135.9, -136.2 (4t, J =5.8 Hz, 1F).

### (2). Homopolymerization of EVE-OH:

EVE-OH (50 g, 0.127 mole) and cesium carbonate (0.5 g) were charged into a 400 ml shaker tube. The tube was sealed and cool-evacuated. It was then was heated at 125-130°C for 16 hours. After cooling, the highly viscous oily product was collected. Yield: 40 g (80%). ¹H NMR (acetone-d₆): δ6.60 (d, J = 52 Hz, 1H, CHF), 4.62 (t, J = 13 Hz, 2H, internal CF₂CH₂O); ¹⁹F NMR (acetone-d₆); -79.6 (m, 3F), -83.1 to -84.7 (m, 4F), -90.3 (m, 2F), -125.3 (m, 2F, internal CF₂CH₂O), -145.2 (m, 1F), -145.4 (m, 1F). The spectral properties matched the homopolymer structure -[CF₂CFHO-CF₂CF(CF₃)O-CF₂CF₂-CH₂O]ₙ- (FPE-1). The weight average molecular weight (M_{w}) of the polyether was determined by gel permeation chromatography (in THF solvent) to be 20,200, with a dispersion factor of 3.70. Thermal gravimetric analysis (TGA) (20°C/min) of a similarly prepared sample showed onset of thermal decomposition at ca. 300°C (air) and 400 °C (N₂). DSC exhibited a T_{g} at -65.7 °C.

The fluoroelastomers employed in the Examples were
FE-1: an iodine-containing copolymer of vinylidene fluoride, perfluoro(methyl vinyl ether), and tetrafluoroethylene, commercially available from DuPont Dow Elastomers as Viton® GBLT-S.
FE-2: a copolymer of ethylene, tetrafluoroethylene and perfluoro(methyl vinyl ether) having iodine and bromine cure sites, commercially available from DuPont Dow Elastomers as Viton® ETP-S.
FE-3: a copolymer of vinylidene fluoride and hexafluoropropylene also containing bisphenol AF curative, commercially available from DuPont Dow Elastomers as Viton® A201C.
FE-4: a copolymer of vinylidene fluoride, hexafluoropropylene and tetrafluoroethylene also containing bisphenol AF curative, commercially available from DuPont Dow Elastomers as Viton® B601C.

### Examples 1-5 and Comparative Examples A and B

Compositions of the invention (Examples 1-5) and control compositions (Comparative Examples A and B), not containing a fluorinated polyether, were made by compounding the ingredients in a conventional manner on a 2-roll mill. The ingredients and proportions are shown in Table I.

**Table I**

| **Formulation, phr** | **Comp. Ex. A** | **Ex. 1** | **Ex. 2** | **Ex. 3** | **Ex. 4** | **Ex. 5** | **Comp. Ex. B** |
|---|---|---|---|---|---|---|---|
| Fluorinated Polyether FPE-1 | 0 | 5 | 10 | 20 | 15 | 20 | 0 |
| Carbon Black¹ | 30 | 30 | 30 | 30 | 50 | 50 | 50 |
| Fluoroelastomer FE-1 | 100 | 100 | 100 | 100 | 10 | 100 | 100 |
| | | | | | 0 | | |
| Zinc Oxide² | 3 | 3 | 3 | 3 | 3 | 3 | 3 |
| TAIC³ | 3 | 3 | 3 | 3 | 3 | 3 | 3 |
| Luperox 101 XL 45⁴ | 1.5 | 1.5 | 1.5 | 1.5 | 1.5 | 1.5 | 1.5 |

| | | | | | | | |
|---|---|---|---|---|---|---|---|
| ¹MT Thermax N 990 (available from Lehmann & Voss Co.) | | | | | | | |
| ² Extrox 100 (available from Elementis Specialties UK Ltd.) | | | | | | | |
| ³ triallyl isocyanurate (available from DuPont Dow Elastomers as Diak 7) | | | | | | | |
| ⁴ organic peroxide (available from Atofina) | | | | | | | |

Cure characteristics of the above compositions and physical properties of cured test specimens (180°C press cure for 10 minutes, followed by post cure in an air oven at 230°C for 2 hours) were measured according to the Test Methods. Results are shown in Table II.

**Table II**

| **Example** | **Comp. A** | **1** | **2** | **3** | **4** | **5** | **Comp. B** |
|---|---|---|---|---|---|---|---|
| Curing Characteristics | | | | | | | |
| ML (dNm) | 1.44 | 1.22 | 1.09 | 0.77 | 1.26 | 1.11 | 2 |
| MH (dNm) | 29.74 | 25.01 | 21.72 | 17.06 | 24.04 | 21.42 | 39.82 |
| Delta M (dNm) | 28.3 | 23.79 | 20.63 | 16.29 | 22.78 | 20.31 | 37.82 |
| Ts2 (min.) | 0.47 | 0.48 | 0.5 | 0.51 | 0.43 | 0.43 | 0.39 |
| Tc 50 (min.) | 0.76 | 0.75 | 0.76 | 0.74 | 0.69 | 0.68 | 0.73 |
| Tc90 (min.) | 1.32 | 1.3 | 1.28 | 1.23 | 1.32 | 1.24 | 1.43 |
| Peak rate (dNm/min) | 49 | 44 | 36 | 30 | 42 | 38 | 61 |

| Physical Properties | | | | | | | |
|---|---|---|---|---|---|---|---|
| T_{B} (MPa) | 16.7 | 12.9 | 13.5 | 12.8 | 12.7 | 11.3 | 17.7 |
| E_{B} (%) | 224 | 213 | 292 | 313 | 211 | 214 | 192 |
| M₁₀₀ (MPa) | 4.4 | 3.5 | 2.6 | 2.1 | 4.4 | 3.4 | 7.8 |
| Hardness Shore A (pts) | 68.9 | 65.5 | 61.5 | 55.2 | 67.1 | 63.7 | 77.3 |
| T_{S} (kN/m) | 16 | 16.6 | 17.3 | 15 | 16 | 15.3 | 21.8 |
| Comp Set (%) | 22 | 23 | 24 | 25 | 21 | 21 | 19 |
| (70 hrs @ 200°C) | | | | | | | |
| TR-10 (°C) | -27 | -28 | -28 | -30 | -28 | -29 | -27 |
| T_{g} start (°C) | -22.4 | -24.2 | -24.7 | -27.2 | -26.9 | -26.4 | -23.3 |
| T_{g} inflection (°C) | -24.8 | -26.1 | -27.6 | -30.5 | -33.1 | -28.7 | -25 |
| T_{g} end (°C) | -27.8 | -30.9 | -31.8 | -34.2 | -34.6 | -33.9 | -28.4 |

The effect of heat aging (168 hours @250°C) on physical properties of the above samples was measured. Results are contained in Table III. The Δ values reported refer to the percent (tensile strength, elongation and modulus) or absolute (hardness) difference between the original values reported in Table II and the values measured after heat aging.

**Table III**

| **Example** | **Comp. A** | **1** | **2** | **3** | **4** | **5** | **Comp. B** |
|---|---|---|---|---|---|---|---|
| ΔT_{B}(%) | -21.0 | -15.5 | -31.9 | -46.1 | -43.3 | -44.2 | -31.6 |
| ΔE_{B} (%) | 80.4 | 108.9 | 62.0 | 90.1 | 87.2 | 84.6 | 54.2 |
| ΔM₁₀₀ (%) | -40.9 | -42.9 | -30.8 | -42.9 | -50.0 | -47.1 | -48.7 |
| ΔHardness (pts) | -1.2 | -0.6 | -1.2 | -2.3 | 1.2 | 0.6 | 0.6 |
| Weight Change (%) | -3.7 | -4 | -4.4 | -5.3 | -4.8 | -5.6 | -3.7 |
| T_{g} start(°C) | -23.6 | -24.3 | -26.2 | -28.2 | -27 | -27.7 | -23.3 |
| T_{g} inflection (°C) | -24.7 | -26 | -29 | -31.4 | -29.9 | -30.5 | -24.8 |
| T_{g} end (°C) | -28.2 | -30.9 | -33.5 | -34.9 | -34.8 | -35.5 | -29.9 |

Some of the original (i.e. not heat aged) examples were soaked in M-15 fuel for 168 hours at 23°C. The effect of the fuel on physical properties vs. the original properties reported in Table II is shown in Table IV.

**Table IV**

| **Example** | **4** | **5** | **Comp. B** |
|---|---|---|---|
| ΔT_{B} (%) | -26 | -25 | -29 |
| ΔE_{B} (%) | -19 | -18 | -19 |
| ΔM₁₀₀ (%) | -14 | -6 | -15 |
| ΔHardness (pts) | -9.2 | -8.2 | -9.0 |
| Weight Change (%) | 6.6 | 6.6 | 6.5 |
| Volume Change (%) | 17.7 | 18.3 | 15.6 |

### Example 6

A composition of the invention (Example 6) and control composition (Comparative Example C), not containing a fluorinated polyether, were made by compounding the ingredients in a conventional manner on a 2-roll mill. The ingredients and proportions are shown in Table V.

**Table V**

| **Formulation, phr** | **Example 6** | **Comp. Ex. C** |
|---|---|---|
| Fluorinated Polyether | 20 | 0 |
| FPE-1 | | |
| MT Carbon Black¹ | 15 | 15 |
| Furnace Carbon Black² | 30 | 30 |
| Fluoroelastomer FE-2 | 100 | 100 |
| Zinc Oxide³ | 3 | 3 |
| TAIC⁴ | 3 | 3 |
| Luperox 101 XL 45⁵ | 3 | 3 |

| | | |
|---|---|---|
| ¹MT Thermax N 990 (available from Lehmann & Voss Co.) | | |
| ² Regal SRF N772 (available from Cabot GmbH, Germany) | | |
| ³ Extrox 100 (available from Elementis Specialties UK Ltd.) | | |
| ⁴ triallyl isocyanurate (available from DuPont Dow Elastomers as Diak 7) | | |
| ⁵ organic peroxide (available from Atofina) | | |

Cure characteristics of the above compositions and physical properties of,cured test specimens (180°C press cure for 5 minutes, followed by post cure in an air oven at 230°C for 16 hours) were measured according to the Test Methods. Results are shown in Table VI.

**Table VI**

| **Example** | **Example 6** | **Comp. Ex. C** |
|---|---|---|
| Curing Characteristics | | |
| ML (dNm) | 1.42 | 2.46 |
| MH (dNm) | 20.08 | 33.05 |
| Delta M (dNm) | 18.66 | 31.05 |
| Ts2 (min.) | 0.5 | 0.5 |
| Tc 50 (min.) | 0.85 | 1.0 |
| Tc90 (min.) | 1.94 | 2.7 |
| Peak rate (dNm/min) | 24 | 39 |

| Physical Properties | | |
|---|---|---|
| T_{B} (MPa) | 14.4 | 20.7 |
| E_{B} (%) | 254 | 124 |
| M₁₀₀ (MPa) | 5.4 | 15.2 |
| Hardness Shore A (pts) | 78 | 87 |
| T_{S} (kN/m) | 22.3 | 23.7 |
| Comp Set (%) | 57 | 55 |
| (70 hrs @ 200°C) | | |
| TR-10 (°C) | -13 | -9 |

### Examples 7 and 8

Compositions of the invention (Examples 7 and 8) and control compositions (Comparative Example D and E), not containing a fluorinated polyether, were made by compounding the ingredients in a conventional manner on a 2-roll mill. The ingredients and proportions are shown in Table VII.

**Table VII**

| **Formulation, phr** | **Ex. 7** | **Comp. Ex. D** | **Ex. 8** | **Comp. Ex. E** |
|---|---|---|---|---|
| Fluorinated Polyether | 20 | 0 | 20 | 0 |
| FPE-1 | | | | |
| Fluoroelastomer FE-3 | 100 | 100 | 0 | 0 |
| Fluoroelastomer FE-4 | 0 | 0 | 100 | 100 |
| MT Carbon Black¹ | 45 | 45 | 45 | 45 |
| Furnace Carbon Black² | 10 | 10 | 10 | 10 |
| Magnesium Oxide³ | 3 | 3 | 3 | 3 |
| Calcium Hydroxide⁴ | 1.6 | 1.6 | 1.6 | 1.6 |

| | | | | |
|---|---|---|---|---|
| ¹ Thermax Floform N990 (available from Lehmann & Voss Co.) | | | | |
| ² Regal SRF N772 (available from Cabot GmbH, Germany) | | | | |
| ³ Elastomag 170 99% (available from Morton Performance Chemicals, Inc.) | | | | |
| ⁴ Rhenofit CF (available from Rhein Chemie Rheinau GmbH, Germany) | | | | |

Cure characteristics of the above compositions and physical properties of cured test specimens (180°C press cure for 10 minutes, followed by post cure in an air oven at 230°C for 24 hours) were measured according to the Test Methods. Results are shown in Table VIII.

**Table VIII**

| **Example** | **Example 7** | **Comp. Ex. D** | **Example 8** | **Comp. Ex. E** |
|---|---|---|---|---|
| Curing Characteristics | | | | |
| ML (dNm) | 0.94 | 1.01 | 2.02 | 3.12 |
| MH (dNm) | 34.52 | 41.28 | 27.73 | 43.89 |
| Delta M (dNm) | 33.58 | 40.27 | 25.71 | 40.77 |
| Ts2 (min.) | 1.17 | 1.05 | 1.47 | 1.15 |
| Tc 50 (min.) | 1.63 | 1.4 | 2.49 | 2.38 |
| Tc90 (min.) | 3.07 | 2.73 | 3.52 | 3.6 |
| Peak rate (dNm/min) | 61 | 110 | 25 | 54 |

| Physical Properties | | | | |
|---|---|---|---|---|
| T_{B} (MPa) | 10.5 | 15.8 | 10.3 | 16.7 |
| E_{B} (%) | 157 | 135 | 182 | 169 |
| M₁₀₀ (MPa) | 7.34 | 12.35 | 6.36 | 10.69 |
| Hardness Shore A (pts) | 89 | 94 | 89 | 93 |
| Comp Set (%) | 50 | 46 | 56 | 44 |
| (70 hrs @ 200°C) | | | | |
| TR-10 (°C) | -18 | -17 | -18 | -14 |

## Claims

1. A curable composition comprising
A) a fluoroelastomer copolymer;
B) a fluorinated polyether having a general formula of -[CF₂CFH-O-R_{f}-CF₂CH₂O]ₙ-, wherein n is such that M_{w} is between 2000 and 100,000 and R_{f} is selected from the group consisting of a) -(CF₂)ₛ-, wherein s is 1 to 10; and b) -[CF₂CF(CF₃)O]ₜ(CF₂)ᵤ-, wherein u is 1 to 10 and t is 1 to 20; and
C) a curing agent.

2. A curable composition of Claim 1 wherein said fluorinated polyether has a M_{w} between 15,000 and 45,000.

3. A curable composition of Claim 2 wherein said fluorinated polyether has an R_{f} group having said formula -(CF₂)ₛ- and wherein s is 1-3.

4. A curable composition of Claim 2 wherein said fluorinated polyether has an R_{f} group having said formula
-[CF2CF(CF₃)O]ₜ(CF₂)ᵤ- and wherein both t and u are 1.

5. A curable composition of Claim 1 wherein said fluoroelastomer comprises copolymerized units selected from the group consisting of a) vinylidene fluoride and hexafluoropropylene; b) vinylidene fluoride, hexafluoropropylene and tetrafluoroethylene; c) vinylidene fluoride and perfluoro(methyl vinyl ether); d) vinylidene fluoride, perfluoro(methyl vinyl ether) and tetrafluoroethylene; e) vinylidene fluoride, tetrafluoroethylene and propylene; f) tetrafluoroethylene and propylene; g) ethylene, tetrafluoroethylene and perfluoro(methyl vinyl ether); and h) tetrafluoroethylene and perfluoro(methyl vinyl ether).

6. A curable composition of Claim 5 wherein said fluoroelastomer further comprises cure sites selected from the group consisting of iodine endgroups; bromine endgroups; copolymerized iodine-containing cure site monomers; bromine-containing cure site monomers; bis-olefin cure site monomers; nitrile group-containing cure site monomers; trifluoroethylene; 3,3,3-trifluoropropene-1; 1,2,3,3,3-pentafluoropropylene; 1,1,3,3,3-pentafluoropropylene; 2,3,3,3-tetrafluoropropene; and combinations thereof.

7. A curable composition of Claim 1 wherein said curing agent is selected from the group consisting of organic peroxides, polyhydroxy compounds, bis(aminophenols), tetraamines, organotin compounds and ammonia generating compounds.

8. A curable composition of Claim 1 further comprising an acid acceptor selected from the group consisting of metal oxides, metal hydroxides and a combination thereof.

## Patentansprüche

1. Vernetzbare Zusammensetzung, aufweisend:
A) ein Fluorelastomer-Copolymer;
B) einen fluorierten Polyether mit der allgemeinen Formel -[CF₂CFH-O-R_{f-}CF₂CH₂O]ₙ-, worin n so groß ist, dass M_{w} zwischen 2.000 und 100.000 liegt, und worin R_{f} ausgewählt ist aus der Gruppe, bestehend aus a) -(CF₂)₅-, worin s 1 bis 10 beträgt, und b) -[CF₂CF(CF₃)O]ₜ(CF₂)ᵤ-, worin u 1 bis 10 beträgt und t 1 bis 20 beträgt; sowie
C) ein Vernetzungsmittel.

2. Vernetzbare Zusammensetzung nach Anspruch 1, worin der fluorierte Polyether eine M_{w} zwischen 15.000 und 45.000 hat.

3. Vernetzbare Zusammensetzung nach Anspruch 2, worin der fluorierte Polyether eine R_{f}-Gruppe mit der Formel -(CF₂)₅- hat und worin s 1 bis 3 beträgt.

4. Vernetzbare Zusammensetzung nach Anspruch 2, worin der fluorierte Polyether eine R_{f}-Gruppe mit der Formel hat: -[CF₂CF(CF₃)O]ₜ(CF₂)ᵤ- und worin sowohl t als auch u 1 betragen.

5. Vernetzbare Zusammensetzung nach Anspruch 1, worin das Fluorelastomer copolymerisierte Einheiten aufweist, die ausgewählt sind aus der Gruppe, bestehend aus: a) Vinylidenfluorid und Hexafluorpropylen; b) Vinylidenfluorid, Hexafluorpropylen und Tetrafluorethylen; c) Vinylidenfluorid und Perfluor(methylvinylether); d) Vinylidenfluorid, Perfluor(methylvinylether) und Tetrafluorethylen; e) Vinylidenfluorid, Tetrafluorethylen und Propylen; f) Tetrafluorethylen und Propylen; g) Ethylen, Tetrafluorethylen und Perfluor(methylvinylether) und h) Tetrafluorethylen und Perfluor(methylvinylether).

6. Vernetzbare Zusammensetzung nach Anspruch 5, worin das Fluorelastomer ferner Vernetzungsstellen aufweist, die ausgewählt sind aus der Gruppe, bestehend aus Iod-Endgruppen; Brom-Endgruppen; copolymerisierte, Iod enthaltende Monomere mit Vernetzungsstelle; Brom enthaltende Monomere mit Vernetzungsstelle; Bisolefin-Monomere mit Vernetzungsstelle; eine Nitril-Gruppe enthaltende Monomere mit Vernetzungsstelle; Trifluorethylen; 3,3,3-Trifluorpropen-1; 1,2,3,3,3-Pentafluorpropylen; 1,1,3,3,3-Pentafluorpropylen; 2,3,3,3-Tetrafluorpropen und Kombinationen davon.

7. Vernetzbare Zusammensetzung nach Anspruch 1, worin das Vernetzungsmittel ausgewählt ist aus der Gruppe, bestehend aus organischen Peroxiden, PolyhydroxyVerbindungen, Bis(aminophenolen), Tetraaminen, Organozinnverbindungen und Ammoniak erzeugenden Verbindungen.

8. Vernetzbare Zusammensetzung nach Anspruch 1, ferner aufweisend einen Säureakzeptor, ausgewählt aus der Gruppe, bestehend aus Metalloxiden, Metallhydroxiden und einer Kombination davon.

## Revendications

1. Composition durcissable comprenant
A) un copolymère de fluoroélastomère;
B) un polyéther fluoré ayant comme formule générale -[CF₂CFH-O-R_{f-}CF₂CH₂O]ₙ-, où n est tel que M_{w} est compris entre 2000 et 100 000 et R_{f} est choisi dans le groupe constitué de a) -(CF₂)ₛ-, où s vaut 1 à 10; et de b) -[CF₂CF(CF₃)O]ₜ(CF₂)ᵤ-, où u vaut 1 à 10 et t vaut 1 à 20; et
C) un agent durcissant.

2. Composition durcissable selon la revendication 1 dans laquelle ledit polyéther fluoré a un M_{w} entre 15 000 et 45 000.

3. Composition durcissable selon la revendication 2 dans laquelle ledit polyéther fluoré a un groupe R_{f} répondant à ladite formule -(CF₂)ₛ- et dans laquelle s vaut 1-3.

4. Composition durcissable selon la revendication 2 dans laquelle ledit polyéther fluoré a un groupe R_{f} répondant à ladite formule -[CF₂CF(CF₃)O]ₜ(CF₂)ᵤ- et dans laquelle t et u valent chacun 1.

5. Composition durcissable selon la revendication 1 dans laquelle ledit fluoroélastomère comprend des motifs copolymérisés choisis dans le groupe constitué de a) fluorure de vinylidène et hexafluoropropylène; b) fluorure de vinylidène, hexafluoropropylène et tétrafluoroéthylène; c) fluorure de vinylidène et perfluoro(méthylvinyléther); d) fluorure de vinylidène, perfluoro(méthylvinyléther) et tétrafluoroéthylène; e) fluorure de vinylidène, tétrafluoroéthylène et propylène; f) tétrafluoroéthylène et propylène; g) éthylène, tétrafluoroéthylène et perfluoro(méthylvinyléther); et h) tétrafluoroéthylène et perfluoro(méthylvinyléther).

6. Composition durcissable selon la revendication 5 dans laquelle ledit fluoroélastomère comprend en outre des sites de durcissement choisis dans le groupe constitués des groupes terminaux iode; des groupes terminaux brome; des monomères à sites de durcissement contenant de l'iode copolymérisés; des monomères à sites de durcissement contenant du brome; des monomères à sites de durcissement bis-oléfiniques; des monomères à sites de durcissement contenant des groupes nitrile; du trifluoroéthylène; du 3,3,3-trifluoropropène-1; du 1,2,3,3,3-pentafluoropropylène; du 1,1,3,3,3-pentafluoropropylène; du 2,3,3,3-tétrafluoropropène; et de leurs combinaisons.

7. Composition durcissable selon la revendication 1 dans laquelle ledit agent durcissant est choisi dans le groupe constitué des peroxydes organiques, des composés polyhydroxylés, des bis(aminophénols), des tétraamines, des composés organostanniques et des composés générateurs d'ammoniac.

8. Composition durcissable selon la revendication 1 comprenant en outre un accepteur d'acide choisi dans le groupe constitué des oxydes de métaux, des hydroxydes de métaux et d'une combinaison de ceux-ci.
